(19) Europäisches Patentamt / European Patent Office / Office européen des brevets

(11) **EP 1 739 450 A1**

(12) **EUROPEAN PATENT APPLICATION**

(43) Date of publication:
**03.01.2007 Bulletin 2007/01**

(51) Int Cl.:
**G01S 5/10** $^{(2006.01)}$

(21) Application number: **05014183.7**

(22) Date of filing: **30.06.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(71) Applicant: **SES Astra S.A.**<br>**6815 Château de Betzdorf (LU)**<br><br>(72) Inventors:<br>• **Gross, Markus**<br>**66564 Ottweiler (DE)** | • **Krier, Georges, Dr.**<br>**6740 Grevenmacher (LU)**<br>• **Harles, Guy**<br>**5823 Fentange (LU)**<br><br>(74) Representative: **Joppich, Martin**<br>**Intellectual Property Consultancy**<br>**Zeppelinstrasse 71-73**<br>**81669 München (DE)** |

(54) **Method and apparatus for determining the location of a stationary satellite receiver**

(57)    The invention refers to a location method and location apparatus for determining the location of a stationary satellite receiver having a stationary satellite antenna by means of ranging packets within satellite payload signals. Said satellite payload signals are transmitted from one or more earth stations at defined earth station positions and are relayed from one or more satellites at different geostationary orbital positions to be received by the same stationary satellite antenna, wherein each ranging packet within the corresponding satellite payload signal is related to a time stamp information with regard to the point of time when the ranging packet was transmitted from the corresponding earth station, and wherein a plurality of the ranging packets is detected by the stationary satellite receiver in the received satellite payload signals, wherein the relative time differences between the points of time of detection of the corresponding ranging packets are measured and wherein the measured relative time differences are collected and are related to the defined earth station positions, the time stamp information and the satellite position information for estimating the location of the stationary satellite receiver by means of a secondary condition for resolving the redundancy of the measured relative time differences.

Fig. 3

**Description**

The invention refers to a location method and location apparatus for determining the location of a stationary satellite receiver having a stationary satellite antenna by means of ranging packets within satellite payload signals. Furthermore, the invention refers to a broadcasting method and a broadcasting apparatus.

A ranging packet in the sense of the present invention is any packet within a satellite payload signal having a special PID and being used for ranging purposes.

US 6,864,838 B2 discloses a ranging system and method for satellites by means of ranging packets within satellite payload signals. The satellite payload signals are modulated digital transport stream signals like a DVB-S signal, wherein the ranging packets are inserted in these satellite payload signals by way of a time stamp information. In order to compensate the unknown delay of the satellite payload signals in the decoding arrangement of the downlink part it is suggested to use decoding arrangements of identical structure both in the uplink part and the downlink part. The corresponding ranging packets are fed both in the uplink part and the downlink part through these decoding arrangements before the time stamp information within the ranging packets is processed by a corresponding time measurement circuit. It has been found that this structure provides a high accuracy for performing precise ranging operations with regard to satellites. However, US 6,864,838 B2 does not disclose the location of a stationary satellite receiver on earth.

The GPS (Global Positioning System) is a well known system for providing any point on earth with accurate timing and ranging information. The basic technique for determining the GPS coordinates of a GPS receiver is based on a trilateration solution having three satellites with known positions. If the distances from each satellite to the receiver are measured, then the unknown position of the receiver can be determined. The trilateration solution corresponds to the ideal case but in practice other configurations are also applied in order to compensate measurement errors or to make use of other position information available. For example, if the clock bias of the receiver is unknown a quadrilateration configuration can be used with four satellites visible from the receiver. On the other hand, a bilateration configuration might be applied if a precise local clock is available and if on the other hand the geodetic reference model of the earth surface is used as a further coordinate.

GPS receivers are well established and provide a precise location method on earth. Nevertheless, the invention has discovered that for some purposes a more simple receiver instead of a GPS receiver is sufficient. These purposes apply e.g. to cases where a stationary satellite receiver has to be located on earth and where a real-time measurement of the location is not required.

Therefore, it is an object of the invention to provide a location method for a stationary satellite receiver which is easy to implement without the need to change the existing system configuration.

This object is solved by a method according to claim 1 and an apparatus according to claim 10.

The method according to the invention is a location method for determining the location of a stationary satellite receiver having a stationary satellite antenna by means of ranging packets within satellite payload signals, wherein said satellite payload signals are transmitted from one or more earth stations at defined earth station positions and are relayed from one or more satellites at different geostationary orbital positions to be received by the same stationary satellite antenna, said geostationary orbital positions being controlled in accordance with a satellite position information by the one or more earth stations, wherein each ranging packet within the corresponding satellite payload signal is related to a time stamp information with regard to the point of time when the ranging packet was transmitted from the corresponding earth station, and wherein a plurality of the ranging packets is detected by the stationary satellite receiver in the received satellite payload signals, wherein the relative time differences between the points of time of detection of the corresponding ranging packets are measured and wherein the measured relative time differences are collected and are related to the defined earth station positions, the time stamp information and the satellite position information for estimating the location of the stationary satellite receiver by means of a secondary condition for resolving the redundancy of the measured relative time differences.

The apparatus according to the invention is a location apparatus for determining the location of a stationary satellite receiver having a stationary satellite antenna by means of ranging packets within satellite payload signals, wherein said satellite payload signals are transmitted from one or more earth stations at defined earth station positions and are relayed from one or more satellites at different geostationary orbital positions to be received by the same stationary satellite antenna, said geostationary orbital positions being controlled in accordance with a satellite position information by the one or more earth stations, comprising: an interface for receiving time stamp information related to each ranging packet within the corresponding satellite payload signal with regard to the point of time when the ranging packet was transmitted from the corresponding earth station, and for receiving relative time differences measured in the stationary satellite receiver between the points of time of detection of the ranging packets received within said satellite payload signals by the stationary satellite receiver, and a location processor for collecting the measured relative time differences and relating them to the defined earth station positions, the time stamp information and the satellite position information for estimating the location of the stationary satellite receiver by means of a secondary condition for resolving the redundancy of the measured relative time differences.

The invention makes it possible to locate stationary satellite receiver in a broadcast satellite system. Since the birth of TV in 1923, the core principle of television has not changed. The broadcast companies determine the programme whereas the audience has no influence on it. But a new emerging technique, called interactive TV (iTV) allows the user to manipulate the flow of the programme and even to participate live in the actual broadcast. Those systems use a terrestrial or satellite back-channel to send user data back to providers of the interactive services.

Typical applications for iTV are interactive advertisement, home shopping, video on demand (VoD) sports betting and games.

The invention realises a cost-efficient localization structure in an existing satellite broadcast system with a minimum of additional installations at the user side. In contrast to a GPS system, which requires additional hardware components in a commercial satellite TV receiver, the invention proposes a method which makes use of the already existing stationary satellite antenna of the user. The principle is to measure the time difference of arrival of satellites at different geostationary orbital positions but which are narrowly enough co-located so that the downlink signals of the co-located satellites can still be received by the same stationary satellite antenna of the stationary satellite receiver. Nowadays, satellites are co-located within a single geostationary orbital slot in order to enable an optimum use of the available orbital slots and of the limited frequency spectrum. To the users on ground, the co-located satellites appear as a single satellite with a large capacity. The interference between the co-located satellites is avoided by making the satellites transmit signals which are polarized orthogonal and/or which have a different frequency spectrum.

Usually, the stationary satellite antenna for receiving satellite payload signals from geostationary orbital positions is a satellite dish having one low-noise block downconverter (LNB) which is capable of receiving the satellite payload signals from one geostationary orbital slot. The invention enables a resolution between these geostationary orbital positions within one geostationary orbital slot of as narrow as 0.1˚ or even below.

However, there are also satellite dishes available having two or more LNBs installed at different focal points of the dish so that satellite payload signals from different geostationary orbital slots can be received. These satellite dishes can also be used according to the invention providing a better resolution of the measured relative time differences due to a larger spacing between the geostationary orbital positions.

A further cognition of the invention is the fact that the relative time differences between the points of time of detection of corresponding ranging packets of two satellite payload signals deriving from different satellite positions are measured. Hence, it is not necessary for the stationary satellite receiver to know the absolute GPS time but it is merely necessary to provide a precise and stable clock for carrying out the measurement of said relative time differences which are in the range of 200 $\mu$s, wherein the duration of two consecutive detections of two ranging packets in two different satellite payload signals is in the order of 1 second due to the necessary switchover from one satellite payload signal to the other satellite payload signal. This makes it possible to refrain from expensive time measurement equipment within the stationary satellite receiver. Rather, between the measurements it is possible to adjust the frequency of the local oscillator of the stationary satellite receiver to a reference frequency which can be extracted from the satellite payload signal. Such a reference frequency is e.g. provided by the PCR values of a MPEG data stream. A corresponding apparatus and method for extracting such a reference frequency out of a satellite payload signal is e.g. disclosed in EP 1030464 B1.

The measured relative time differences are collected for a later estimation of the location of the stationary satellite receiver. As soon as enough relative time differences have been collected, the relative time differences are related within a system of equations to the other available information in the system which are the defined earth station positions of the one or more earth stations, the time stamp information with regard to the point of time when each ranging packet was transmitted from the corresponding earth station and the satellite position information with regard to the corresponding satellite positions from which the corresponding ranging packets were relayed. The result is a system of equations which is overdetermined but which can be solved by means of a secondary condition for resolving the redundancy of the measured relative time differences.

According to a further aspect of the invention the satellite payload signals are DVB-S data streams transmitted by the one or more earth stations. Hence, the existing DVB-S front-end of the satellite receiver can be used wherein at the same time the data bandwidth occupied by the ranging packets is negligible small and does not affect the conventional DVB-S data stream.

According to a further aspect of the invention the movement of the one or more satellites is used to refer to different geostationary orbital positions of the one or more satellites. Thereby, in principle one satellite is sufficient to provide all the necessary location information at the satellite receiver. However, according to a preferred aspect at least two satellites are co-located within a geostationary orbital slot by which the information of one measurement of one relative time difference can be provided at once. As soon as the position of at least one of said two satellites changes, a further measurement of another relative time difference can be taken. The same applies to a configuration of more than two satellites where it can be switched in a suitable manner between the corresponding satellite payload signals to achieve the needed measurements of the relative time differences. Furthermore, in order to reduce one unknown variable of the location of the stationary satellite receiver the geodetic model of the earth can be used as a further position information.

The ranging packets can be identified by a packet sequence information which is unambiguously related to the corresponding defined earth station positions, the time stamp information and the satellite position information.

According to a further aspect of the invention the estimation of the location of the satellite receiver is carried out in said satellite receiver for which purpose the ranging packets carry the necessary time stamp information and the necessary satellite position information besides the packet sequence information.

According to another aspect of the invention one earth station is provided, wherein the estimation of the location of the satellite receiver is carried out in said earth station. For this purpose the measured relative time differences together with the corresponding packet sequence information are returned from the stationary satellite receiver to said earth station. In general, it goes without saying that the estimation procedure of the location of the satellite receiver is not bound to any specific location or position but can be carried out at any place which is suitable for this purpose as soon as all the necessary information has been transmitted to this place.

According to a further aspect of the invention the secondary condition for the estimation of the location of the stationary satellite receiver is based on a least mean squares algorithm. According to the invention, the amount of the collected data will exceed the unknown variables so that the resulting system of equations is overdetermined. This redundancy can be resolved by the condition that the error variation of the estimated solution with regard to the single collected data should be minimized. The corresponding solution can be found iteratively by a recursive algorithm feeding consecutively new data to the algorithm or can be found for one data block of collected data by solving the resulting system of equations.

According to a further aspect of the invention, reference values are used for improving the location estimation of the stationary satellite receiver, wherein said reference values are provided by one or more reference receiver having known positions and receiving the satellite payload signals.

A reference receiver, which can either be positioned within the ground station or somewhere else, allows to measure either reception time of the ranging packets in case the reference receiver is connected to a GPS time- and frequency source, or to measure the time difference of two consecutive ranging packets in case the reference receiver is only provided with a free running oscillator. The principle is to compare these measurement results with a theoretical value, which can be obtained based on the known positions of the corresponding earth station, the corresponding satellite and the reference receiver itself. The delays which are compensated in this way are for example delays in the ground station which are still unknown, unknown delays in the satellite transponders etc.

As already mentioned above, the invention makes it possible to provide location based services in an interactive TV environment.

Hence, another method according to the invention is a broadcasting method for broadcasting a plurality of satellite payload signals from an earth station to a plurality of stationary satellite receiver, wherein the payloads of each satellite payload signal are controlled in accordance with the location of each of said plurality of stationary satellite receiver determined by a location method as described above.

Furthermore, another apparatus according to the invention is a broadcasting apparatus for broadcasting a plurality of satellite payload signals from an earth station to a plurality of stationary satellite receiver, wherein the payloads of each satellite payload signal are controlled in accordance with the location of each of said plurality of stationary satellite receiver determined by a location apparatus as described above. The payloads of each satellite payload signal can be controlled in accordance with the location of the stationary satellite receiver by a corresponding marker which is introduced in the payloads at the earth station before transmitting the payloads. Although the payloads are broadcast so that all payloads can be received by all stationary satellite receivers, there is a filter in each stationary satellite receiver which allows to select a subset of the received payloads depending on the marker and thus depending on the estimated location.

The invention will now be described by way of an example and with reference to the accompanying drawings in which

Fig. 1    shows the uplink part of a satellite broadcast system according to the invention,

Fig. 2    shows a schematic of the measurement board of a stationary satellite receiver according to the invention,

Fig. 3    shows a satellite broadcast system for determining the location of a stationary satellite receiver according to the invention,

Fig. 4    shows a first type of a reference receiver for improving the location estimation according to the invention,

Fig. 5    shows a second type of a reference receiver for improving the location estimation according to the invention, and

Fig. 6     shows a third type of a reference receiver for improving the location estimation according to the invention.

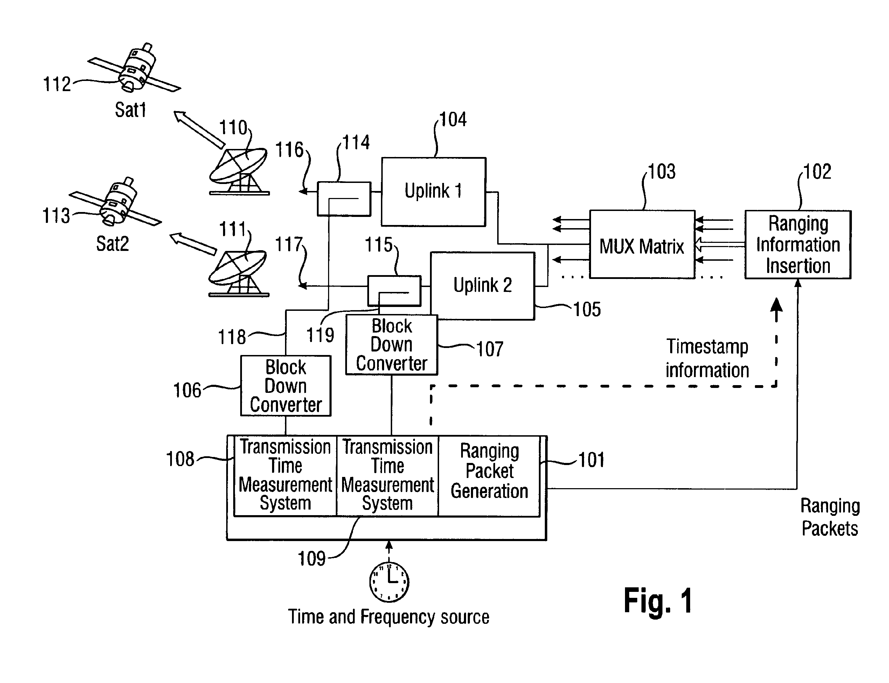

Fig. 1 shows the uplink part of a satellite broadcast system according to the invention. The task of the uplink part is to provide as an uplink satellite payload signals and to insert ranging packets in said satellite payload signals. Besides being able to cope with unidirectional satellite payload signals, the satellite could also include capabilities to perform bidirectional communications. This is of particular interest when dealing with interactive TV (iTV) which is an application of the present invention.

The satellite payload signals could for example be of the type of a DVB-S satellite payload signal. Each ranging packet has a packet sequence information and is related to a time stamp information and a satellite position information. If the location estimation takes place in the stationary satellite receiver, the packet sequence information, the time stamp information and the satellite position information are carried with the ranging packets. If, on the other hand, the location estimation takes place in the earth station, it is sufficient that each ranging packet carries only the packet sequence information which is related to the corresponding time stamp information and the satellite position information stored in the earth station.

The packet sequence information corresponds to the continuity counter of the usual DVB-S satellite payload signal but is extended such that the packet sequence information remains unambiguous without reaching its maximum value within one procedure of position estimation of a specific stationary satellite receiver.

The time stamp information provides for each ranging packet a time stamp which corresponds to the moment of time when the ranging packet was transmitted from the uplink station.

The satellite position information corresponds to the position of the satellite to which a ranging packet is sent at the moment of time when the ranging packet was transmitted from the uplink station. This satellite position information is available in the corresponding earth station which controls the position of the satellite.

The ranging packets to be inserted are generated by the ranging packet generator 101 and are sent to the ranging information insertion 102, where the payload of the ranging packet is manipulated. Hence, at the ranging information insertion 102 the packet sequence information for the corresponding packet is inserted. Furthermore, the time stamp information of the previous ranging packet is also available in the ranging information insertion 102 and is inserted in the present ranging packet. If more than one satellite is involved in the measurements, all available time stamp information of the previous ranging packets which were sent in parallel to the corresponding satellites are inserted in the present ranging packet so that the stationary satellite receiver is free of choosing one of these time stamp information which is necessary for the location estimation.

The ranging packet modified in this way is sent to the MUX matrix 103. The MUX matrix 103 combines different data sources and merges them in one satellite payload signal. After the uplink equipment consisting of uplink 104 and uplink 105 the satellite payload signals are split in the splitters 114 and 115. The satellite payload signals 116, 117 are transmitted via the antennas 110, 111 to the satellites 112, 113, whereas the satellite payload signals 118, 119 are converted from the transmission frequency to a lower intermediate frequency by the block down converter 106, 107 and are fed to the transmission time measurement systems 108, 109.

The transmission time measurement systems 108, 109 allow to measure the moment of time when a ranging packet has already passed the MUX matrix, so that the stochastically produced delays of the MUX matrix are not taken into account by this measurement. Although the actual moment of time when a ranging packet leaves the uplink equipment cannot be measured by the transmission time measurement systems 108, 109, the time stamp information provided by the transmission time measurement systems 108, 109 still can be used for determining the relative time differences of two satellite payload signals as long as the delays of the splitters 114, 115 and the block down converters 106, 107 are nearly identical.

As soon as the transmission time of one packet has been determined by one of the transmission time measurement systems 108, 109, the corresponding time stamp information will be inserted in a subsequent ranging packet, since the present packet has already left the uplink part.

Even though the previous description referred to one earth station only, it should be mentioned that more than one earth station can be employed according to the invention. In this case, a time- and frequency-synchronisation has to be performed between the individual earth stations. In any case it is necessary to know the precise position of the earth station on earth.

The position of the satellites is also controlled by the earth station, e.g. by sending corresponding satellite position information via the earth stations to the satellites.

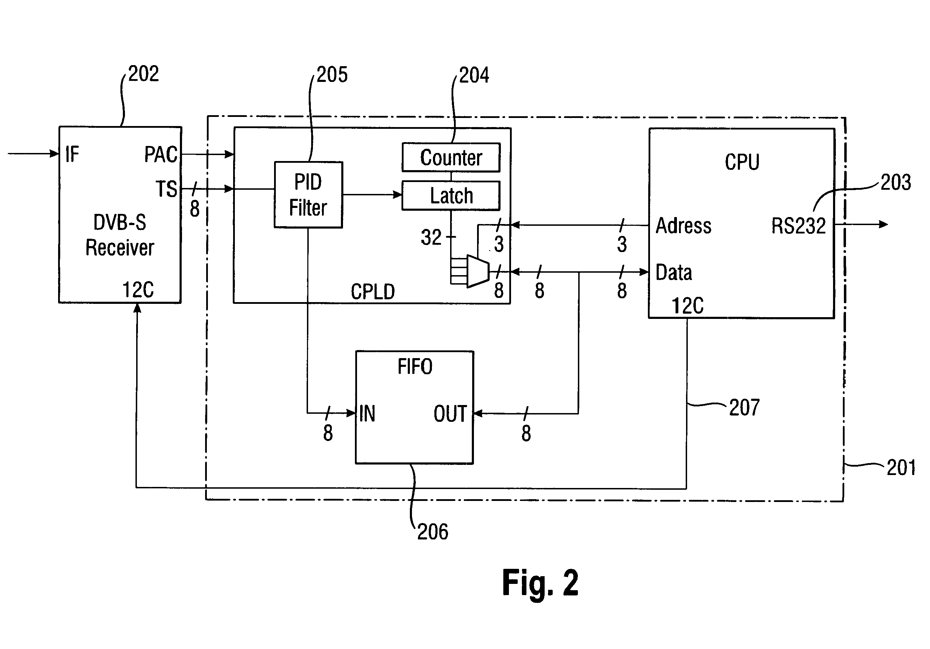

Fig. 2 shows a schematic of the measurement board of a stationary satellite receiver according to the invention. The measurement board 201 is controlling the DVB-S receiver 202, is monitoring the digital output stream (satellite payload signal) and is communicating with the PC via a serial port 203.

For economical reasons the measurement board is not time synchronized with a GPS clock. However, the received DVB-S data stream of the satellite payload signals allows to control a free running oscillator which drives the counter 204 of the measurement board such that only a time offset with respect to the GPS clock is present. For this purpose, consecutive incoming ranging packets having a time stamp information or the clock reference of the DVB-S payload packets are used as time reference. Knowing the time in-between two ranging packets and the change of the free running oscillator within this time, it is possible to estimate the average frequency $\overline{f}_{osc}[n]$ over this time.

Because of the time offset between the counter 204 and the GPS clock, it is not possible to compute the range to a satellite directly. However, the relative time difference between the points of time of detection of the corresponding time stamp information or of the corresponding packet sequence information in two satellite payload signals deriving from two different satellite positions can be computed in which case this time offset is eliminated.

The counter 204 is triggered by the packet identifier (PID) filter 205, checking satellite payload signals for ranging packets with the right PID. Those ranging packets are latched into the FIFO 206.

For determining the relative time difference between two ranging packets, two satellite payload signals have to be received. However, because the receiver 202 has just one tuner, it is not possible to receive two satellite payload signals simultaneously. Therefore, the relative time difference can only be measured of two consecutive ranging packets after having switched to the other satellite payload signal. Assuming that the system - especially the satellite positions - has not changed in between, the results will, however, be the same.

Therefore, in order to perform a measurement, a ranging packet is received from a first satellite, and then the receiver is changed to receive a ranging packet from the second satellite. This change is performed periodically after a certain number of ranging packets.

In principle, there is a loss of accuracy caused by the inherent stochastic delays of the receiver, by the movement of the satellites and by the error of the frequency estimation.

The errors induced by the stochastic delay of the receiver can be reduced by an averaging effect when applying the algorithm for estimating the location of the receiver. Knowing the movement of the satellites, it is furthermore possible to correct the error caused by the movement of the satellites during the post processing.

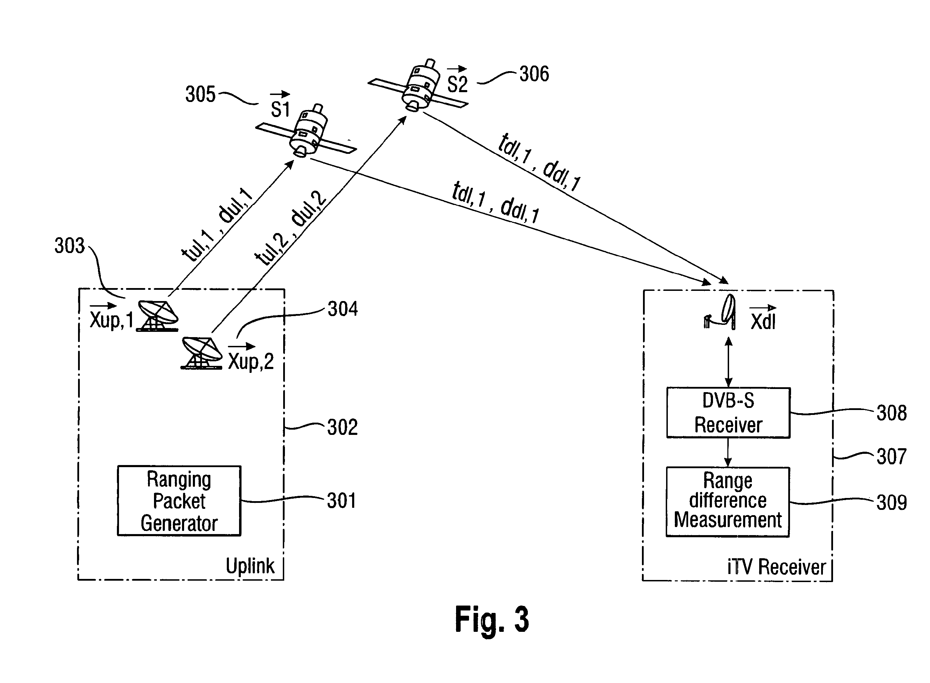

Fig. 3 shows a satellite broadcast system for determining the location of a stationary satellite receiver according to the invention. The ranging packet generator 301 within the uplink 302 provides DVB-S ranging packets with a certain PID. Those ranging packets are inserted into the DVB-S satellite payload signal, as explained in the description relating to Fig. 1, and transmitted via the earth stations 303 and 304 to the satellites 305 and 306.

In order to be in line of sight from the iTV receiver 307 (stationary satellite receiver) without the need of performing re-adjustments of the latter, the satellites have to be co-located within the same geostationary orbital position, i.e. be positioned within the same station keeping box.

The ranging packets are relayed by the satellites and are sent to a stationary satellite receiver 307. The satellite receiver 307 consists of a down-converter (like LNB/Mono-block), a DVB-S receiver 308 delivering the satellite payload signal and the range difference measurement 309. The range difference measurement 309 measures the ranging packet arrival time (PAT) of the inserted ranging packets and computes the range difference.

The difference of the distances of the two DVB-S satellite links $\Delta\rho_{meas}$ can be calculated as follows. Using the notation as given in Fig. 3, that is:

$d_{ul,1}$      distance on uplink path to satellite 1

$d_{dl,1}$      distance on downlink path from satellite 1

$d_{ul,2}$      distance on uplink path to satellite 2

$d_{dl,2}$      distance on downlink path from satellite 2

$\vec{S1}$      position of satellite Sat1

$\vec{S2}$      position of satellite Sat2

$\vec{x}_{dl}$      downlink position

$\vec{x}_{up}$      uplink position $\Delta\rho_{meas}$ can be written as:

$$\Delta\rho_{meas} \overset{!}{=} d_{dl,2} + d_{ul,2} - \left(d_{dl,1} + d_{ul,1}\right) = \left|\vec{x}_{dl} - \vec{s}_2\right| + \left|\vec{x}_{up} - \vec{s}_2\right| - \left(\left|\vec{x}_{dl} - \vec{s}_1\right| + \left|\vec{x}_{up} - \vec{s}_1\right|\right) \tag{1}$$

wherein $\Delta\rho_{meas}$ is proportional to the measured relative time difference, having the speed of light as the proportional factor.

The technique used to estimate the relative time difference is inserting ranging packets with a certain ID (PID), as shown in Fig. 1, into the DVB-S satellite payload signal of both satellite links and measuring the transmission and reception time. Even though transmission and reception time are not measured in the same time frame, i.e. an offset is present, the relative time difference can be determined with this information.

The use of DVB-S ranging packets allows to use the existing link structures without the installation of additional equipment at the receiver side and avoids the transmission of additional signals like spread spectrum signals, interfering with the main signal.

Existing receivers are mainly single feed systems pointing to an exclusive geostationary orbital position. Usage of co-located geosynchronous satellites allows the reception of different satellites with said single feed antennas but the resulting satellite geometry is poor.

Equation 1 shows the non-linear relationship between the range difference $\Delta\rho_{meas}$ and the downlink position $x_{dl}$. This equation can be linearised by using a tailor approximation around an approximated reference point $\vec{x}_{ref}$:

$$\vec{x}_{dl} = \vec{x}_{ref} + d\vec{x} \qquad (2)$$

The resulting linear equation for a single range difference measurement is:

$$\Delta\rho_{meas} \overset{!}{=} d_{up,2} - d_{up,1} + \frac{\vec{x}_{ref} - \vec{s}_2}{\left|\vec{x}_{ref} - \vec{s}_2\right|} \cdot d\vec{x} - \frac{\vec{x}_{ref} - \vec{s}_1}{\left|\vec{x}_{ref} - \vec{s}_1\right|} \cdot d\vec{x} \qquad (3)$$

$$\underbrace{\left(\frac{\vec{x}_{ref} - \vec{s}_2}{\left|\vec{x}_{ref} - \vec{s}_2\right|} - \frac{\vec{x}_{ref} - \vec{s}_1}{\left|\vec{x}_{ref} - \vec{s}_1\right|}\right)}_{Ai} \cdot d\vec{x} \overset{!}{=} \underbrace{\Delta\rho_{meas} - d_{up,2} + d_{up,1}}_{bi} \qquad (4)$$

To perform a triangulation of the terminal position, at least 3 different measurements are needed. To reduce the level of unknown variables, it is assumed that the user terminal is on the surface of the earth and force the position of the user terminal at a certain height over a geodetic model of the earth. The used earth model is the Geodetic Reference System 1980 (GSR80).

Even adding the height information, there is still a lack of a third equation. To achieve a sufficient number of equations, the movement of the geosynchronous satellites is utilized to perform multiple measurements over time and to realize different satellite constellations. However, due to the minimal motion of the satellites it might be necessary to apply observation periods up to several hours. The stopping criteria for this process is the convergence of the estimated location of the stationary satellite receiver within a predetermined boundary. This means, once the estimated location does not change anymore significantly from one measurement to the next measurement, the location is considered to be sufficiently accurate.

These stopping criteria can also be calculated on the basis of the single available values without the need of a running estimation of the location of the stationary satellite receiver if just the noise levels of the single values are known. The knowledge of the system and the noise levels of the single values make it possible to predict the uncertainty of the position estimation before actually carrying out the estimation algorithm. If the predicted uncertainty is sufficiently small, the collection of the measurements can be stopped.

Furthermore, said prediction of the uncertainty of the position estimation can also be used in order to find out the optimal satellite constellation of the co-located satellites with regard to the present measurement. Hence, if there are more than two co-located satellites within one single orbit slot, it is possible to choose always those two satellites for measuring the relative time difference which yield the lowest predicted uncertainty of the position estimation.

Eventually, by using said prediction of the uncertainty of the position estimation it is also possible to estimate in advance the period of time which is necessary to collect enough data for obtaining a position estimation within a certain error boundary.

The estimation of the position is based on several range difference measurements, described in equation 4 and can be combined in one system of equations:

$$\underbrace{\begin{pmatrix} A_1 \\ A_1 \\ \vdots \\ A_{n-1} \\ A_n \end{pmatrix}}_{\underline{A}} \cdot d\vec{x} \overset{!}{=} \underbrace{\begin{pmatrix} b_1 & b_2 & \cdots & b_{n-1} & b_n \end{pmatrix}}_{\vec{b}} \quad \Leftrightarrow \quad \underline{A} \cdot d\vec{x} = \vec{b} \qquad (5)$$

This matrix equation is over determined and can be solved in the meaning of minimum mean square error, using the generalized pseudo inverse A⁻ of the visibility matrix A.

$$\underline{A}^- = \left(\underline{A}^T \underline{A}\right)^{-1} \underline{A}^T \qquad (6)$$

$$d\vec{x} = \underline{A}^- \cdot \vec{b} \qquad (7)$$

Finally, it should be noted, that the estimation of the location could either be performed within the stationary satellite receiver or within the earth station. In the first case it is necessary to send the time stamp information for each ranging packet together with the satellite position information of the corresponding satellite and the defined position of the earth station with the ranging packet itself. In the second case it is sufficient that the packet sequence information of each packet is related to the corresponding time stamp information stored in the earth station, wherein the measured relative time differences are returned from the stationary receiver to the earth station.

While a method was given in the description of Fig. 1 by which the so-called insertion time could be determined and therefore taken account of in the subsequent estimation of the location, some measurement inaccuracies are still present within the system. Such measurement inaccuracies could include delays in the ground station which are still unknown, unknown delays in the satellite transponders, errors depending on the measurement method (It was stated, that the measurement using consecutive ranging packets relies on the - often not applicable - assumption of stationary satellites.), and errors in the satellite positions - all factors which can hardly be taken care of by considering only the insertion time.

To address this problem one or more reference receiver can be added to the location determination system as described above. Each reference receiver will improve the resulting accuracy and will also shorten the measurement period.

A reference receiver is a fixed installed receiver with known position on earth. The reference receiver is measuring constantly the range difference between the different positions of a satellite and/or the positions of different satellites. The fundamental idea is to compare the time delay of arrival (TDOA) measured in this way with a theoretical value for the TDOA, which can be obtained based on the known positions of the earth station(s), the satellite(s) and the reference receiver.

By computing the difference between a theoretical model and the measurements, a compensation value can be determined. This compensation value can be employed when estimating the location of the stationary satellite receiver. In this way measurement inaccuracies contained in the compensation value can be eliminated or at least reduced in further location determinations. Due to this improvement in the accuracy when estimating the location, the required number of measurements will be reduced as well, i.e. the estimated location converges faster towards the actual location.

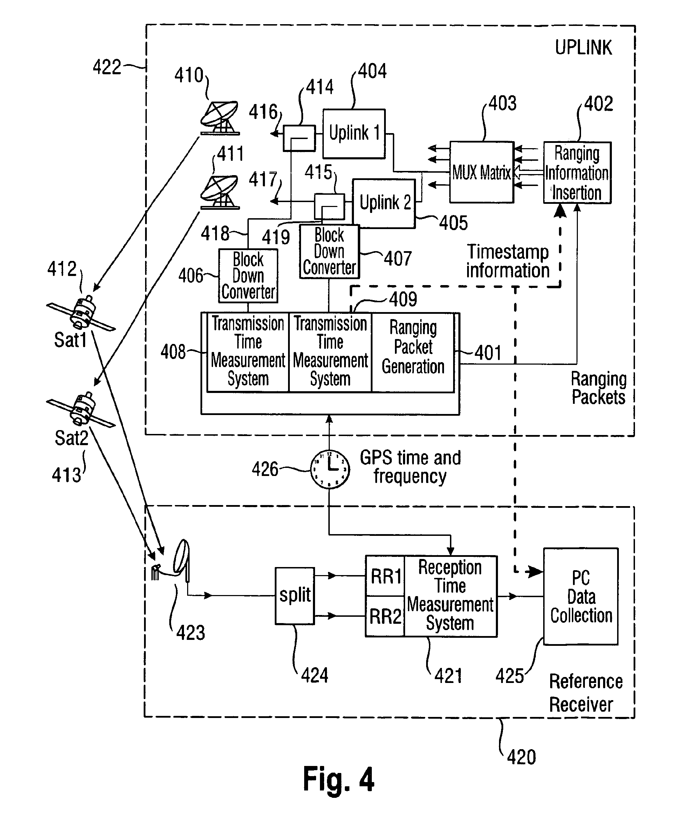

Fig. 4 to Fig. 6 show three different types of reference receivers for improving the location estimation according to the invention. These differ in the installation costs, the resulting accuracy and the necessary efforts.

Fig. 4 shows a first type of a reference receiver for improving the location estimation according to the invention. This type of the reference receiver 420 is performing real range measurements for both satellites 412 and 413 using a reception time measurement system 421 that is synchronized to the transmission time measurement systems 408 and 409 of the earth station 422.

The setup of the reference receiver 420 consists of a standard dish with a LNB 423, a power splitter 424, a reception time measurement system 421, and a PC 425.

The IF signal from the LNB 423 is supplied via the power splitter 424 to both ranging receivers (RR1, RR2) of the reception time measurement system 421.

The reception time measurement system 421 uses the same time- and frequency source 426 as the ground station 422 to measure the reception time of the ranging packets generated by the ranging packet generation 401 at the uplink station 422. Therefore, the reference receiver 420 can be positioned directly at the earth station 422. The PC 425 is collecting the data of the reference receiver 420 and the timestamp information of the uplink station 422.

Knowing the uplink time and the reception time, it is possible to compute the range and the range difference to both satellites 412 and 413. Considering the known positions of the satellites 412 and 413, it is possible to compute the difference between the measured range difference and the theoretical range difference.

By measuring the uplink and the reception time, it is possible to compute the distance to both satellites 412 and 413 and the respective range difference very accurately. By comparing these measurements with a theoretical model, the compensation value caused by the various factors as mentioned above can be determined. It is also possible to check the satellite ephemeris and its interpolation.

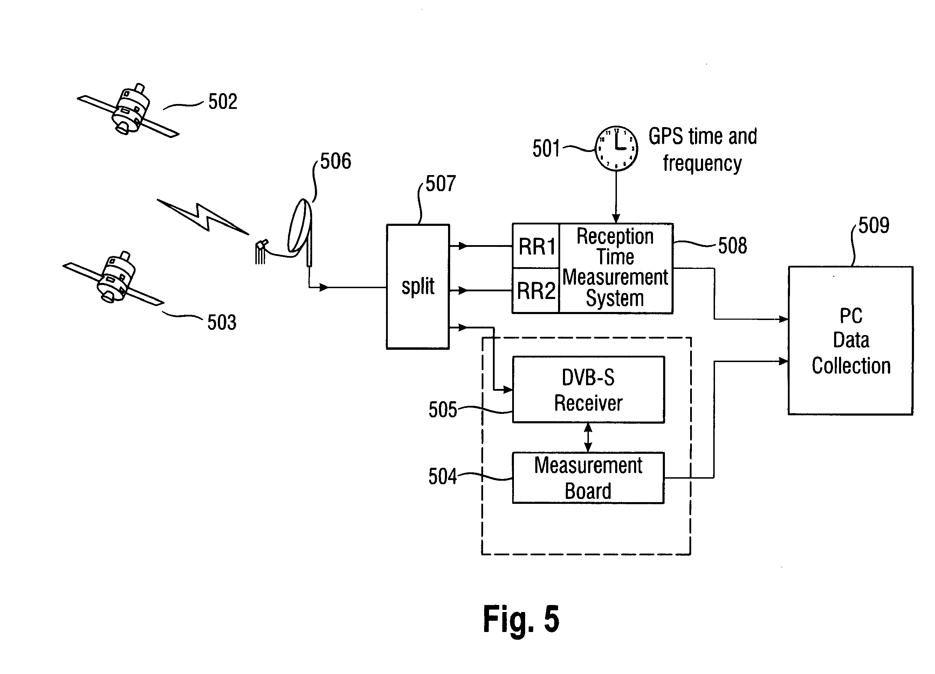

Fig. 5 shows a second type of a reference receiver for improving the location estimation according to the invention. This type is using a separate GPS time and frequency source 501 to apply pseudo range measurements for both satellites 502 and 503 or for two positions of one satellite. Due to the separate GPS time and frequency source 501 there is no need to position the reference receiver within the ground station. However, the resulting accuracy is not as high as that of the first type according to Fig. 4, because there are synchronization errors between the clock at the uplink station and this local reference receiver.

A measurement board 504 as described with reference to Fig. 2 is used to extract the uplink timestamps out of the ranging packets once the signal passed through the receiver, in this case a DVB-s receiver 505.

The reference receiver consists of standard dish with a LNB 506, a power splitter 507, a reception time measurement system 508, a GPS time- and frequency source 501, a DVB-S receiver 505, a measurement board 504 and a PC 509.

The L-Band signal of the LNB 506 is distributed via a power splitter 507 to both ranging receivers of the reception time measurement system 508 and to a receiver 505 with a measurement board 504. A GPS time- and frequency source 501 delivers the time and frequency reference for the reception time measurement system 508 and a PC 509 is collecting all the data.

The ranging receivers are measuring the reception time of the ranging packets, generated by the ranging packet generation at the uplink side. The DVB-S receiver 505 with measurement board 504 is receiving the ranging packets and reads out the uplink time stamp information in the payload of the ranging packets, inserted by the ranging packet generation at the uplink side.

Even though the uplink time and the reception time have been measured with unsynchronized clocks, a pseudo range to both satellites 502 and 503 and a pseudo range difference can be calculated. Noticeably, the resulting accuracy of the system is still quite good.

By comparing the results with the theoretical model of the system, again a compensation value can be determined. Eventually, the satellite ephemeris and its interpolation can be verified.

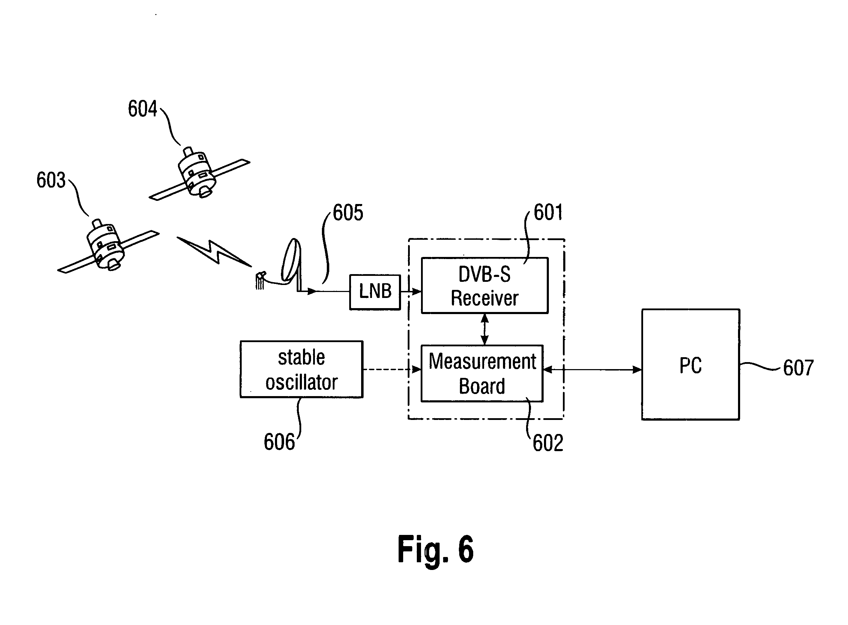

Fig. 6 shows a third type of a reference receiver for improving the location estimation according to the invention. This type is using a DVB-S receiver 601 with a measurement board 602, to measure the pseudo range difference of both satellites 603 and 604 or two positions of one satellite. A measurement board 602 as described with reference to Fig. 2 is employed for this purpose.

This reference receiver is using the same techniques, as the stationary satellite receiver according to the invention. It is measuring the time difference of two consecutive ranging packets with its internal free running clock within the measurement board 602. The uplink time of the ranging packets is extracted from the payload of the ranging packets, in order to compute the pseudo range difference.

It was mentioned before, that the accuracy of such a system is limited, due to the stochastic delays in the reference receiver and the time discretization noise. However, an improvement of the measurement results can be achieved, by considering a longer measurement period and using a more stable oscillator.

This reference receiver consists of a standard dish with LNB 605, a DVB-S receiver 601 with measurement board 602, a stable oscillator (XCO) 606 and a PC 607.

Compared to the first and second types of the reference receiver, the accuracy when determining the compensation value is lower. However, this approach represents a cheaper method to obtain a compensation factor at all. The third type of reference receiver can be positioned at any known location.

## EP 1 739 450 A1

**Claims**

1. Location method for determining the location of a stationary satellite receiver having a stationary satellite antenna by means of ranging packets within satellite payload signals,
   wherein said satellite payload signals are transmitted from one or more earth stations at defined earth station positions and are relayed from one or more satellites at different geostationary orbital positions to be received by the same stationary satellite antenna, said geostationary orbital positions being controlled in accordance with a satellite position information by the one or more earth stations,
   wherein each ranging packet within the corresponding satellite payload signal is related to a time stamp information with regard to the point of time when the ranging packet was transmitted from the corresponding earth station, and wherein a plurality of the ranging packets is detected by the stationary satellite receiver in the received satellite payload signals, wherein the relative time differences between the points of time of detection of the corresponding ranging packets are measured and wherein the measured relative time differences are collected and are related to the defined earth station positions, the time stamp information and the satellite position information for estimating the location of the stationary satellite receiver by means of a secondary condition for resolving the redundancy of the measured relative time differences.

2. Location method according to claim 1, wherein the satellite payload signals are DVB-S data streams transmitted by the one or more earth stations.

3. Location method according to one of the claims 1 - 2, wherein the movement of the one or more satellites is used to refer to different geostationary orbital positions of the one or more satellites.

4. Location method according to one of the claims 1 - 3, wherein at least two satellites are co-located within a geostationary orbital slot.

5. Location method according to one of the claims 1 - 4, wherein the geodetic model of the earth is used as an additional position information.

6. Location method according to one of the claims 1 - 5, wherein the estimation of the location of the satellite receiver is carried out in said satellite receiver for which purpose the ranging packets carry the necessary time stamp information and the necessary satellite position information, wherein each ranging packet is identified by a packet sequence information.

7. Location method according to one of the claims 1 - 5, wherein one earth station is provided and the estimation of the location of the satellite receiver is carried out in said earth station, for which purpose the measured relative time differences are returned from the stationary satellite receiver to said earth station, wherein each ranging packet is identified by a packet sequence information.

8. Location method according to one of the claims 1 - 7, wherein the secondary conditions for the estimation of the location of the stationary satellite receiver is based on a least mean squares algorithm.

9. Location method according to one of the claims 1 - 8, wherein reference values are used for improving the location estimation of the stationary satellite receiver, said reference values are provided by one or more reference receiver having known positions and receiving the satellite payload signals.

10. Broadcasting method for broadcasting a plurality of satellite payload signals from an earth station to a plurality of stationary satellite receiver, wherein the content of each satellite payload signal is controlled in accordance with the location of each of said plurality of stationary satellite receiver determined by a location method according to one of the claims 1 - 9.

11. Location apparatus for determining the location of a stationary satellite receiver having a stationary satellite antenna by means of ranging packets within satellite payload signals, wherein said satellite payload signals are transmitted from one or more earth stations at defined earth station positions and are relayed from one or more satellites at different geostationary orbital positions to be received by the same stationary satellite antenna, said geostationary orbital positions being controlled in accordance with a satellite position information by the one or more earth stations, comprising:

an interface for receiving time stamp information related to each ranging packet within the corresponding satellite payload signal with regard to the point of time when the ranging packet was transmitted from the corresponding earth station, and for receiving relative time differences measured in the stationary satellite receiver between the points of time of detection of the ranging packets received within said satellite payload signals by the stationary satellite receiver, and
a location processor for collecting the measured relative time differences and relating them to the defined earth station positions, the time stamp information and the satellite position information for estimating the location of the stationary satellite receiver by means of a secondary condition for resolving the redundancy of the measured relative time differences.

12. Location apparatus according to claim 11, wherein the satellite payload signals are DVB-S data streams transmitted by the one or more earth stations.

13. Location apparatus according to one of the claims 11 - 12, wherein the movement of the one or more satellites is used to refer to different geostationary orbital positions of the one or more satellites.

14. Location apparatus according to one of the claims 11 - 13, wherein at least two satellites are co-located within a geostationary orbital slot.

15. Location apparatus according to one of the claims 11 - 14, wherein the geodetic model of the earth is used as an additional position information.

16. Location apparatus according to one of the claims 11 - 15, wherein the secondary conditions for the estimation of the location of the stationary satellite receiver is based on a least mean squares algorithm.

17. Location apparatus according to one of the claims 11 - 16, wherein reference values are used for improving the location estimation of the stationary satellite receiver, said reference values are provided by one or more reference receiver having known positions and receiving the satellite payload signals.

18. Broadcasting apparatus for broadcasting a plurality of satellite payload signals from an earth station to a plurality of stationary satellite receiver,
wherein the content of each satellite payload signal is controlled in accordance with the location of each of said plurality of stationary satellite receiver determined by a location apparatus according to one of the claims 11 - 17.

Fig. 1

112 — Sat1

113 — Sat2

110

111

116

117

114

115

104 — Uplink 1

105 — Uplink 2

118

119

106 — Block Down Converter

107 — Block Down Converter

103 — MUX Matrix

102 — Ranging Information Insertion

Timestamp information

108 — Transmission Time Measurement System | Transmission Time Measurement System | Ranging Packet Generation — 101

109

Time and Frequency source

Ranging Packets

EP 1 739 450 A1

**Fig. 2**

EP 1 739 450 A1

**Fig. 3**

EP 1 739 450 A1

**Fig. 4**

Fig. 5

**Fig. 6**

EP 1 739 450 A1

**European Patent Office**

**EUROPEAN SEARCH REPORT**

Application Number

EP 05 01 4183

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/122705 A1 (MARKO PAUL ET AL) 3 July 2003 (2003-07-03) | 10,18 | G01S5/10 |
| A | * paragraphs [0024] - [0026]; figures 1,3A,3B * | 1-9, 11-17 | |
| X | EP 1 026 519 A (SOCIETE EUROPEENNE DES SATELLITES) 9 August 2000 (2000-08-09) * paragraph [0082]; figure 6 * | 10,18 | |
| A | US 6 201 973 B1 (KOWAGUCHI SATOSHI) 13 March 2001 (2001-03-13) * column 2, line 57 - column 4, line 55; figures 1,2A,2B * | 1-18 | |
| A | US 6 456 237 B1 (RUUTU VILLE ET AL) 24 September 2002 (2002-09-24) * column 3, lines 48-61; figure 1 * | 1,11 | |

**TECHNICAL FIELDS SEARCHED (IPC)**

G01S

The present search report has been drawn up for all claims

| Place of search | Date of completion of the search | Examiner |
|---|---|---|
| Munich | 3 November 2005 | Fanjul Caudevilla, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)

**EP 1 739 450 A1**

### ANNEX TO THE EUROPEAN SEARCH REPORT
### ON EUROPEAN PATENT APPLICATION NO.

EP 05 01 4183

This annex lists the patent family members relating to the patent documents cited in  the above-mentioned European search report.
The members are as contained in the European Patent Office EDP file on
The European Patent Office is in no way  liable for these particulars which are merely  given for the purpose of information.

03-11-2005

| Patent document cited in search report | | Publication date | Patent family member(s) | | Publication date |
|---|---|---|---|---|---|
| US 2003122705 | A1 | 03-07-2003 | NONE | | |
| EP 1026519 | A | 09-08-2000 | AU | 779739 B2 | 10-02-2005 |
| | | | AU | 2802900 A | 29-08-2000 |
| | | | BR | 0008073 A | 13-02-2002 |
| | | | CA | 2362067 A1 | 17-08-2000 |
| | | | WO | 0048018 A1 | 17-08-2000 |
| | | | JP | 2002536672 T | 29-10-2002 |
| | | | US | 2002080070 A1 | 27-06-2002 |
| US 6201973 | B1 | 13-03-2001 | AU | 733568 B2 | 17-05-2001 |
| | | | AU | 5969898 A | 01-10-1998 |
| | | | CN | 1200640 A | 02-12-1998 |
| | | | GB | 2325592 A | 25-11-1998 |
| | | | JP | 10276473 A | 13-10-1998 |
| US 6456237 | B1 | 24-09-2002 | AU | 755890 B2 | 02-01-2003 |
| | | | AU | 5946899 A | 01-11-1999 |
| | | | CN | 1131657 C | 17-12-2003 |
| | | | DE | 69927492 D1 | 03-11-2005 |
| | | | EP | 1068762 A1 | 17-01-2001 |
| | | | FI | 980724 A | 01-10-1999 |
| | | | WO | 9953707 A1 | 21-10-1999 |
| | | | JP | 2002511724 T | 16-04-2002 |
| | | | NO | 20004893 A | 29-09-2000 |

EPO FORM P0459

For more details about this annex : see Official Journal of the European Patent Office, No. 12/82

**EP 1 739 450 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6864838 B2

- EP 1030464 B1